(19) Europäisches Patentamt

European Patent Office

Office européen des brevets

(11) **EP 1 324 618 A2**

(12) **EUROPEAN PATENT APPLICATION**

(43) Date of publication:
**02.07.2003 Bulletin 2003/27**

(51) Int Cl.⁷: **H04N 7/36**

(21) Application number: **02396159.2**

(22) Date of filing: **29.10.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **30.10.2001 FI 20012095**

(71) Applicant: **Oplayo Oy**
**00180 Helsinki (FI)**

(72) Inventor: **Pohjola, Teemu**
**02770 Espoo (FI)**

(74) Representative: **Savela, Antti-Jussi**
**Patent Agency Compatent Ltd.**
**Hämeentie 29, 4th. Fl.**
**00500 Helsinki (FI)**

(54) **Encoding method and arrangement**

(57) This invention relates to encoding and decoding images. The invention is a variant of the cascaded VQ with certain improvements acquired from the DCT and DWT approaches. The fundamental aspects of the invention are that codebooks are pre-processed when training them for predetermining the frequency distribution of the resulting codevectors, and each block is independently coded and decoded using a variable number of stages of difference coding needed for coding the particular block.

PRE-PROCESSING TRAINING MATERIAL FOR PREDETERMINING FREQUENCY DISTRIBUTION OF CODEVECTORS TO BE TRAINED ⟶ 81

TRAINING CODEVECTORS AND FORMING CODEBOOKS ⟶ 82

CODING OR DECODING VISUAL INFORMATION USING CASCADED VQ IN A WAY THAT A NECESSARY NUMBER OF STAGES OF CODING OR DECODING ARE USED INDIVIDUALLY FOR EACH ORIGINAL BLOCK ⟶ 83

**FIG. 9**

## Description

Field of the Invention

This invention relates to encoding and decoding images. Especially, the invention relates to encoding and decoding video in streaming media solutions. Streaming media means that a video is transmitted through a network from a sending party to a receiving party in real-time when the video is shown on the terminal of the receiving party.

## Background of the Invention

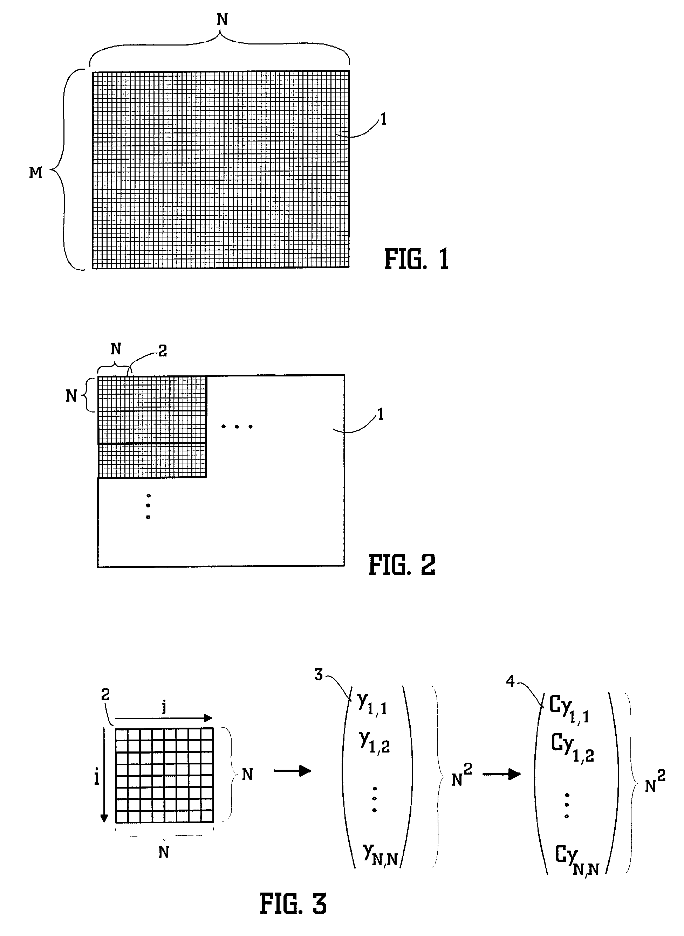

A digital video consists of a sequence of frames - there are typically 25 frames per second - each **1** consisting of $M1$x$N1$ pixels, see Fig. **1.** Each pixel is further represented by 24 bits in some of the standard color representations, such as RGB where the colors are divided into red (R), green (G), and blue (B) components that are further expressed by a number ranging between 0 and 255. A capacity of a stream of $M1$x$N1$x24x25 bits per second (bps) is needed for transmitting all this information. Even a small frame size of 160x120 pixels yields 11,5 Mbps and is beyond the bandwidth of most fixed and, in particular, all wireless Internet connections (9.6kbps (GSM) to some hundreds of kbps within the reach of WLAN). However, all video sequences contain some amount of redundancy and may therefore be compressed.

Any video signal may be compressed by dropping some of the frames, i.e., reducing the frame rate, and/or reducing the frame size. In color videos, a clever choice of the color representation may further reduce the visually relevant information to one half or below, for example the standard transition from RGB to YCrCb representation. YCrCb is an alternative 24 bit color representation obtained from RGB by a linear transformation. The Y component takes values between 0 and 255 corresponding to the brightness or the gray-scale value of the color. The $Cr$ and $Cb$ components take values between -128 and +127 and define the chrominance or color plane. In radial coordinates, the angle around the origin or hue determines the actual color while the distance from the origin corresponds to the saturation of the color. In what follows, these kinds of steps are assumed taken and the emphasis is on optimal encoding of the detailed information present in the remaining frames.

All video compression techniques utilize the existing correlations between and within the frames, on the one hand, and the understanding of the limitations of the human visual system, on the other. The correlations such as immovable objects and areas with constant coloring, may be compressed without loss, while the omission of invisible details is by definition lossy. Further compression requires compromises to be made in the accuracy of the details and colors in the reproduced images.

In absence of cuts (a change of scene) in a video, the consecutive frames differ only if the camera and/or some of the objects in the scene have moved. Such a series of frames can be efficiently encoded finding the directions and magnitudes of these movements and conveying the resulting motion information to the receiving end. This kind of procedure is called motion compensation; the general idea of referring to the previous frame is known as INTER (frame) encoding. Thus an INTER frame closely resembles the previous frame(s). Such a frame can be reconstructed with the knowledge of the previous frame and some amount of extra information representing the changes needed. To get an idea of the achievable compression ratios, let us consider an 8x8 block **2** (see Fig. **2** and **3**), which corresponds to 8x8x24=1536 bits in the original form. If the movement of the block between two consecutive frames **1** is limited between, e.g., -7 and 7 pixels, the two-dimensional motion vector can be expressed with 8 bits resulting in a compression ratio of 192.

In order for this procedure to work, the first frame after each cut needs to be compressed as such - this is called INTRA encoding. Thus an INTRA frame is a video frame that is compressed as a separate image with no references made to any other frame. INTRA frames are needed at the beginning of a video, at cuts, and to periodically refresh the video in order to recover from errors.

Retaining good visual quality of the compressed videos is just one of the many requirements facing any practical video compression technology. For commercial purposes, the encoding process should be reasonably fast in order to facilitate the encoding of large amounts of video content. Apart from a possible initial buffering of frames in the computer's memory, the viewing of a video typically occurs in real time demanding real time decoding and playback of the video. The range of intended platforms from PC's to PDA's (personal digital assistant) and possibly even to third generation mobile phones sets further constraints on the memory usage and processing power needs for the codecs.

Fast decoding is even more important for the so-called streaming videos, which are transmitted to the receiver in real time as he or she is watching them. For streaming videos, a limited data transmission capacity determines a minimum compression ratio over the full length of the video. This is because the bit rate for transmitting the video must remain within the available bandwidth at all times.

Most video compression technologies comprise two components: an encoder used in compressing the videos and a decoder or player to be downloaded and installed in the computers of all the to-be-viewers of the videos. Although this downloading needs to be done only once for each player version, there is a growing interest towards player-free streaming video solutions, which can reach all internet users. In such solutions, a small player application is transmitted to the receiving end together with the video stream. In order to minimize the waiting time due to this overhead information, the application, i.e., the decoder, should be made extremely simple.

For present purposes in this text it is sufficient to consider gray-scale frames/images (color images and different color representations are straight-forward generalizations of what follows). The gray-scale values of the pixels are denoted as the luminance Y. These form a two-dimensional array in a frame and the challenge to the encoding process is to perform the compression and decompression of this array in a way that retains as much of the visually relevant information in the image as possible.

In the INTRA mode, (video or image compression technique used in encoding INTRA frames) each frame is just a gray-scale bitmap image. In practice the image is typically divided into blocks of $NxN$ pixels **2** and each block is analysed independent of the others, see Fig. **3**.

The simplest way to compress the information for an image block is to reduce the accuracy in which the luminance values are expressed. Instead of the original 256 possible luminance values one could consider 128 (the values 0,2,...,254) or 64 values (0,4,...,252) thereby reducing the number of bits per pixel needed to express the luminance information by 12.5% and 25%, respectively. Simultaneously such a scalar quantization procedure induces encoding errors; in the previous exemplary cases the average errors are 0.5 and 1 luminance unit per pixel, respectively. The scalar quantization is very inefficient, however, since it neglects all the correlations between neighbouring pixels and blocks that are present in any real image.

One way to account for the correlations between the pixels is to conceive the image, i.e., the luminance values of the pixels, as a two dimensional surface. Many of the existing image compression algorithms are based on functional transforms in which the functional form of this surface is decomposed in terms of some set of basis functions.

The most widely used transforms are the discrete cosine transform (DCT) and the discrete wavelet transform (DWT), where the basis is formed by cosines and wavelets, respectively. The larger block sizes account for correlations between the pixels over longer distances; the number of basis functions increases as $N^2$ at the same time. In the JPEG and MPEG standards, for example, the block size for the DCT coding is 8x8. The key difference between DCT and DWT is that, in the former, the basis functions are spread across the whole block while, in the latter, the basis functions are also localized spatially.

In the INTER mode, (An INTER mode is a video compression technique used in compressing INTER frames or blocks therein. INTER modes refer to the previous frame(s) and possibly modify them. Motion compensation techniques are representative INTER modes.) the motion compensated blocks may not quite match the originals. In many cases, the resulting error is noticeable but still so small that it is easier to convey the correction information to the receiving end rather than to encode the whole block anew. This is because the errors are typically small and they can be expressed with a lower number of bits than the luminance values in an actual image block. Apart from this distinction, the difference blocks can be encoded in a similar fashion as the image blocks themselves.

As an alternative to the functional transforms one can employ vector quantization (VQ). In VQ methods, the $NxN$ image blocks **2**, or $N^2$ vectors **3** (see Fig. **3**), are matched to vectors of the same size from a pretrained codebook. For each block, the best matching code vector is chosen to represent the original image block. All the image blocks **2** are thus represented by a finite number of code vectors **4**, i.e., the vectors are quantized. The indices of the best matching vectors are sent to the decoder and the image is recovered by finding the vectors from the decoder's copy of the same codebook.

The encoding quality of VQ depends on the set of training images used in preparing the codebook and the number of vectors in the codebook. The dimension of the vector space depends quadratically on the block dimension $N$ ($N^2$ pixel values) whereas the number of possible vectors grows as $256^{N2}$ - the vectors in the codebook should be representative for all these vectors. Therefore in order to maintain a constant quality of the encoded images while increasing the block size, the required codebook size increases exponentially. This fact leads to huge memory requirements and quite as importantly to excessively long search times for each vector. Several extensions of the basic VQ scheme have been proposed in order to attain good quality with smaller memory and/or search time requirements.

Some extensions such as the tree-search VQ only aim at shorter search times as compared to the codebook size. These algorithms do not improve the image quality (but rather deteriorate it) and are of interest here only due to their potential for speeding up other VQ based algorithms.

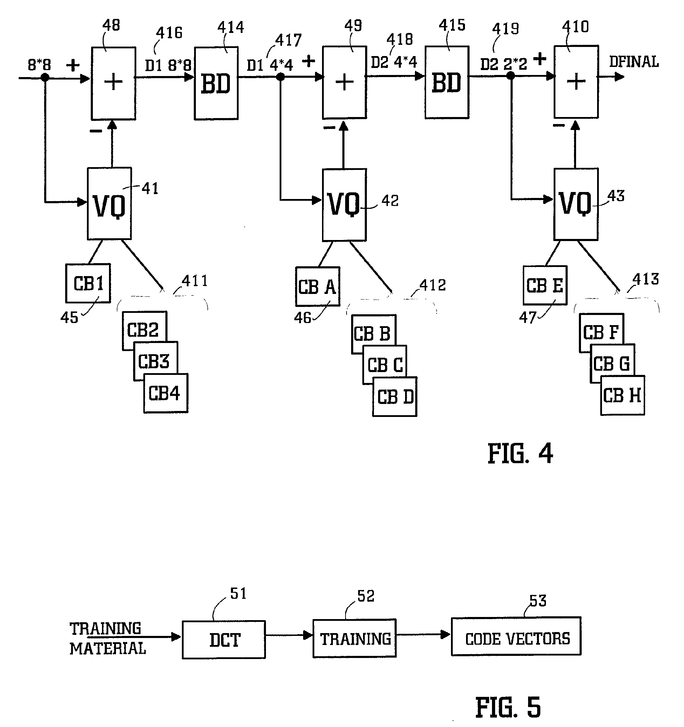

The VQ algorithms aiming at improving the image quality typically use more than one specialized codebook. Depending on the details of the algorithm, these can be divided into two categories: they either improve the encoded image block iteratively, see Fig. **4**, such that the encoding error of one stage is further encoded using another codebook thereby reducing the remaining error, or they first classify the image material in each block and then use different codebooks (**411**, **412**, **413**) for different kinds of material (edges, textures, smooth surfaces). The multi-stage variants are often denoted as cascaded or hierarchical VQ, while the latter ones are known as classified VQ. The motivation behind all these is that by specializing the codebooks, one reduces the effective dimension of the vector space. Instead of representing all imaginable image blocks, one codebook can specialize, for example, to the error vectors whose elements are restricted below a given value (cascaded) or blocks with an edge running through them (classified). In cascaded VQ variants, the vector dimension is often further reduced by decreasing the block size between the stages.

The key advantages in transform coding technologies are their analytically predictable properties and the resulting decorrelated coefficients ranked in terms of their relative importance. These aspects enable efficient rate-distortion control and scalability of a stream according to an available transmission line bandwidth.

Transforms, such as DCT, where all the basis functions extend over the same block area, are more prone to blocking artefacts than DWT like approaches, where the spatial location and extension of the basis function varies. This difference is evident, e.g., when encoding image blocks containing sharp edges (sharp transitions between dark and bright regions). The DCT of such a block yields, in principle, all possible frequencies in at least one spatial direction. In contrast to this, the DWT of the block may lead to just a few nonzero coefficients. The DCT, on the other hand, is more efficient for encoding larger smoothly varying surfaces or textures, which in turn would require large numbers of nonzero wavelet coefficients.

In most actual image blocks, the number of zero transform coefficients is at least comparable to that of the nonzero ones. Hence the encoding efficiency of the transform techniques is to a large extent determined by the efficiency of expressing the zeros without using and transmitting several bits for each and every one of them. In DCT, the coefficients are ranked from the most important and frequently occurring to the least important and rarest. The zeros often occur in sequences and are thus efficiently run-length codable. In DWT, the coefficients are ranked into spatially distinct hierarchies, where the zero coefficients often occur at once in whole branches of the hierarchy. Such branches can then be collectively nullified by one code word.

All the transform coding technologies share one major drawback, namely their computationally heavy decoding side. The decoding involves inverse functional transformations and can be performed fast only on PC level processors. These requirements leave out PDA devices and mobile phones. Typically transform coding is also tied to specific player solutions that need to be downloaded and installed before any video can be viewed.

Another disadvantage of the transform codecs occurs in the context of difference encoding. The difference between the original and the encoded frames and individual blocks depends on the methods used in the initial encoding of the image. For transform coding methods, the remaining difference is only due to quantization errors induced but, for motion compensation schemes or VQ type techniques, the difference is often relatively random although of small magnitude. In this case, the functional transformations yield arbitrary combinations of nonzero components that may be even more difficult to compress than the coefficients of the actual image.

The advantages and disadvantages of vector quantization techniques are quite the opposite from the transform codecs. The compression techniques are always asymmetric with the emphasis on an extremely light decoding process. In its simplest form, the decoding merely consists of table lookups for the code vectors. The player application can be made very small in size and sent at the beginning of the video stream.

A code vector corresponds to whole $NxN$ blocks or alternatively to all the transform coefficients for such a block. If one vector index is sent for each block, the compression ratio is bigger the larger the block size is. However, a big codebook is needed in order to obtain good quality for large $N$. This implies longer times for both the encoding - vector search - and the transmission of the codebook to the receiving end.

On the other hand, the smaller the blocks are the more accurate the encoding result becomes. Smaller blocks or vectors also require smaller codebooks, which require less memory and are faster to send to the receiving end. Also the code vector search operation is faster rendering the whole encoding procedure faster. The disadvantage of smaller block size is the larger amount of indices to be transmitted.

In the improved VQ variants, vector space is split into parts and one codebook is prepared for each part. In the cascaded VQ, in particular, the image quality is improved by an effective increase in the number of achievable vectors V achieved with the successive stages of encoding. In the ideal case, where the vectors in the different stages were orthogonal, adding a stage $i$ with a codebook of $V_i$ vectors would increase $V$ to $VxV_i$. This procedure can significantly improve the image quality with reasonable total codebook size and search times. This improvement is done at the expense of the number of bits needed to encode each block; this increases by $n$ if $V_i=2^n$. The image quality is further improved if the block size is reduced between stages.

There are two problems with the cascaded VQ, however. Firstly, the codebooks are typically trained on realistic difference blocks but with no reference to the human visual system. Consequently, the vectors do not necessarily make the corrections, which are visually the most pleasing. Secondly, the number of bits needed to encode each block grows with the number of stages used and even more rapidly if the block size is reduced on the way.

The intention of the invention is to alleviate the above-mentioned drawbacks. This is achieved in a way described in the claims.

Summary of the Invention

The next definitions should be taken into account when reading this representation.

Basic mode. Image or video compression technique designed to encode an image or a video frame. The term is used as a distinction from difference modes.
Coding. Compression, encoding. Since compression is a basic action when coding in this context, the coding can be understood as acts for making the compression.
Decoding. Decompression.
Difference mode. Image or video compression technique used to encode the difference between two frames, usually between the original and encoded frames. In the latter case, the difference is denoted as the encoding error.
Distortion. Measure of the encoding error. Typically Euclidian norm of the pixelwise differences in the original and encoded luminance values.
Encoding. Compression.

The solution according to the invention combines the best properties of several of the existing solutions. In short, it is a variant of the cascaded VQ with certain improvements acquired from the DCT and DWT approaches. The fundamental aspects of the invention are that codebooks are preprocessed when training them for predetermining the frequency distribution of the resulting codevectors, and each block is independently coded and decoded using a number of stages of difference coding needed for coding the particular block. The invention takes a difference block as input and encodes it further in order to reduce the remaining error in an efficient manner as compared with the additional bits required. The difference block may be the result from any conceivable basic encoding including basic VQ encoding, motion compensation, DCT, and DWT. The invention significantly improves the the image quality in proportion to the rate (bps) used, regardless of both the INTER and the INTRA encoded frames.

In accordance with the above-mentioned matters the invention concerns an encoding method for compressing data, in which method the data is first encoded and difference data between the original data and the encoded data is formed, the difference data is divided into one or more first blocks, which are encoded at least at one stage, each stage comprising the action of the encoding and, if needed for the next stage, an action of calculating a following difference blocks between the current difference blocks and the encoded current difference blocks, performing the consecutive stages in a way that the calculated difference blocks at the previous stage are an input for the following stage, at each stage using a codebook, which is specific for the encoding of the stage, until at a final stage, final difference blocks between the previous difference blocks and the encoded previous difference blocks are encoded using the last codebook, the codebooks for said difference blocks containing codevectors trained with training difference material, and in that prior the training, the training difference material is preprocessed for individually adapting frequency distribution of each codevector for weighting to particular information of the data, and encoding each block independently using a necessary number of the stages needed for the particular block.

Yet the invention concerns an encoder, which utilizes the inventive encoding method in a way that at least one codebook used for coding differences has been weighted to a specific frequency distribution, and the encoder comprises evaluation means for assigning a necessary number of the stages needed for the particular block.

Furthermore taking into account the inventive encoding, the invention concerns a decoding method for decompressing data, the method comprising codebooks for the decompression of encoded difference data, wherein at least one of said codebooks contains codevectors, which have been weighted to a specific frequency distribution, and using the codebooks together performing a decompression result, which comprises at least the most significant frequencies.

And furthermore, the invention concerns a decoder using codebooks for the decompression of encoded difference data, wherein at least one of the codebooks has been weighted to a specific frequency distribution.

Brief Description of the Drawings

In the following the invention is described in more detail by means of FIGs **1 - 10** in the attached drawings where.

| FIG. **1** | illustrates an example of a frame of size N1*M1 pixels, |
| FIG. **2** | illustrates an example of a division of a frame into blocks of size N*N pixels, |
| FIG. **3** | illustrates an example of a block of size N*N pixels, a vector representing the block, and a code vector for quantizing the vector, |
| FIG. 4 | illustrates an example of a known vector quantization arrange-ment, |
| FIG. 5 | illustrates an example of the training of difference material accord-ing to the invention, |
| FIGs 6 and 7 | illustrate a simple example of the inventive way to code each block with a block specific number of coding stages, |
| FIG. 8 | illustrates an example of an arrangement containing evaluation means according to the invention, |
| FIG. 9 | illustrates an example of a flow chart |

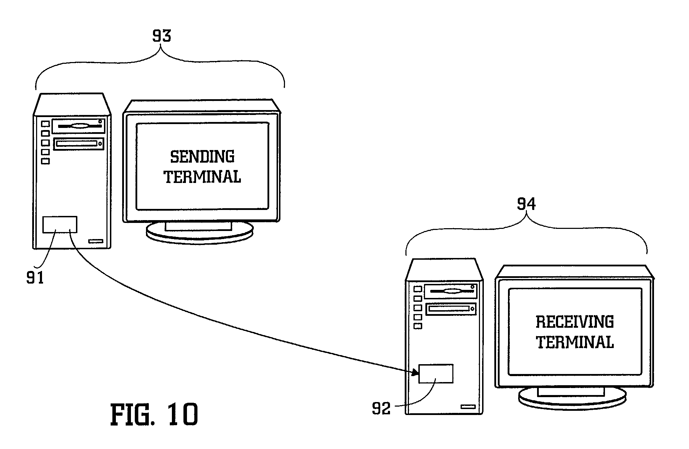

FIG. 10 describing the inventive method, and illustrates an example of an arrangement for the invention.

Detailed Description of the Invention

FIG. 4 illustrates an example of a known vector quantization arrangement. The invention significantly improves the performance of the arrangement, expanding the capable area of using the arrangement. It should be noted that if in this text a block is mentioned in the singular, although in reality, all blocks of images are coded/decoded, the singular form is used for helping the following of the text.

Let us consider an original 8x8 block. At the first stage, this block is coded **41** using either one codebook **45** or alternatively several codebooks **411.** As can be noticed, classified codebooks can be used in a cascaded VQ. Since the coding concerns the original block, the first stage belongs to the basic mode. The difference **416** between the original block and the coded block is calculated **48**. The difference, i.e. the encoding error, can, for example, be measured in standard terms as the distortion

$$d_{tot}^2 = \sum_{i=1}^{N} \sum_{j=1}^{N} d_{i,j}^2 = \sum_{i=1}^{N} \sum_{j=1}^{N} (Y_{i,j}^o - Y_{i,j}^e)^2,$$

where $d_{tot}$ denotes the total distortion for an $NxN$ block and $d_{i,j}$ the distortion of the pixel in the ith row and jth column of the block; $Y_{i,j}^o$ and $Y_{i,j}^e$ are the luminance values of that pixel in the original and encoded blocks, respectively.

The distortion block is divided **414** into four 4x4 subblocks **417**, which are encoded **42** at a second stage (the difference mode) using codebook A **46** or alternatively several codebooks **412.** Each difference coded 4*4 block is subtracted **49** from the original 4*4 difference block. The remaining differences **418** are then further divided **415** into four 2x2 subblocks. Each 2*2 difference block **419** is encoded **43** using another codebook E **47** or alternatively codebooks **413.** Each coded 2*2 difference block is subtracted **410** from the original 2*2 difference block for achieving final remaining difference. It should be noted that the block sizes might alternatively remain at each stage, in which case the divisions of the blocks are not performed.

Each codebook is trained with realistic 'image' material, i.e., at the difference mode with actual difference blocks occurring at the stage where the codebook is to be used. The teaching consists of finding a given number of vectors, which represent the training set as best as possible. This is achieved using the standard k-means algorithm. The measure of goodness is the sum of the Euklidian distances between the training vectors and the code vectors closest to them.

This far the described procedure is equivalent to the usual cascaded VQ and possesses the same virtues such as the simple decoding. The invention consists of two modifications, thereof, that are designed to solve the main weaknesses and strengthen the performance.

Firstly, as showed in FIG. **5**, the training material used in the training of the codebooks is to be pre-processed **51** for predetermining the frequency distribution of the resulting codevectors. This is done by cosine transforming all the training blocks, removing some selection of modes by setting their coefficients to zero, and finally attaining the new training block via inverse transformation. It should be noted that DCT is not the only way to pre-process training material, but another suitable functional transform can be used.

The motivation behind this procedure is twofold. For one thing, it is visually more important to focus the limited number of bits on correcting the low-frequency errors than trying to correct the whole block containing all frequencies. The coefficients, representing frequencies, can be ranked in terms of their importance for the human observer: the eye is more sensitive to the lower spatial frequencies than to the higher ones. This does not necessarily indicate low frequencies in some absolute terms since all frequencies are higher the smaller the block size is, and hence the spread of the function basis. In other words, the resulting code vector (or vectors) is adapted to a desired frequency distribution.

Secondly, all the code vectors in two or more codebooks trained with distinct frequency regimes are at least nearly orthogonal and can be efficiently used together to complement each other. This notion increases the number of possible code vectors achieved with the combination of the basic encoding and two or more stages of difference encoding. The restriction of the code vectors to a limited number of DCT frequencies effectively reduces the vector dimension. For this reason, a codebook of a given size matches the training vectors better than if no frequency selection has been done. This fact leads to still more effective encoding of the visually important components in the difference blocks.

Some possible frequency selections with practical applications include: blocks with just the lowest frequencies, blocks with zero mean value, and blocks with the intermediate frequencies (higher than in the first case but not the highest ones). After the preprocessing, the actual training is performed 52, from which the best matching code vectors **53** are found, and codebooks are formed.

The other modification to the standard cascaded VQ concerns the spatial adaptability of the difference encoding. In the spirit of DWT, the usage of further difference modes is decided separately for each block, i. e., the encoding of one block may involve several successive stages of difference encoding while its neighbouring block is decided to be encoded well enough with the mere basic mode.

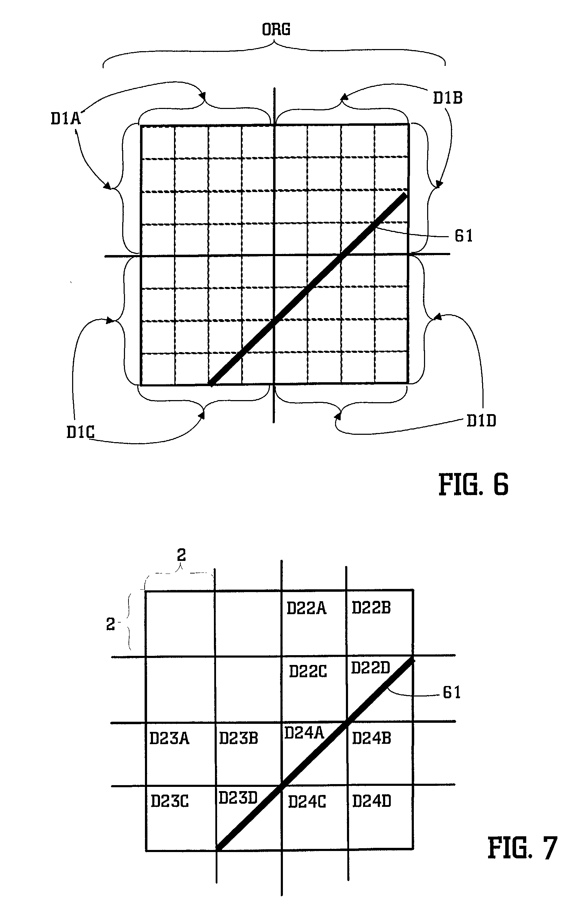

FIGs **6** and **7** illustrate a simple example of the inventive way to code each block with a block specific number of coding stages, FIG. **6** shows an 8*8 block **ORG** which is coded (compare FIG. **4, 41**) and the difference between the original and the coded block is divided (FIG. **4, 417**) into 4*4 blocks **D1A** to **D1D** at the first stage. After this, each block is examined for the need of a further stage of coding. Since the original 8*8 block illustrates a line **61** across a uniform background, the coding of the first stage is sufficient for block **D1A** wherein there only exists the background. The other blocks **D1B** to **D1D** need further coding according to the examination.

FIG. **7** shows a division of the coded 4*4 difference blocks (FIG. **4, 415**) into 2*2 blocks **D22A-D22D, D23A-D23D,** and **D24A-D24D** at the second stage. After the division, each block is examined for the need of a further stage of coding. Since blocks **D22A, D22B, D22C, D23A, D23B, D23C, D24B, D24C,** and **D24C** illustrate only a minor part of the line **61** across the uniform background or purely the background, the coding of the second stage is sufficient for these blocks. The other blocks **D22D, D24A,** and **D23D** need further a third stage of coding. As a result of coding the original 8*8 block, one 4*4 block, i.e. block **D1A,** has been coded using one stage, several 2*2 blocks (blocks **D22A, D22B, D22C, D23A, D23B, D23C, D24B, D24C,** and **D24C)** have been coded using two stages, and three 2*2 blocks **(D22D, D24A,** and **D23D)** have been coded using three stages.

The decision for using additional stages of coding is based on rate-distortion considerations in the form of some kind of cost function involving the relative cost for using further bits while achieving some reduction in the block's distortion. In other words, if the cost of using additional stage is too much, the additional stage(s) is unnecessary. The cost function may be weighted in a desired way, i.e. weighting the cost of the bits used in proportion to distortion. Furthermore, and how it should be understood in a large view, the weighting takes account the weighted use of bits per a distortion value (such as a distortion value of luminance or chrominance components). The use of bits may be weighted linearly or nonlinearly over the range of distortion values.

The advantage of this procedure is the increased flexibility of the bit allocation across each frame. Consequently, the difficult regions can be encoded with a succession of difference modes and code vectors while simpler regions can be corrected once or left as they are. This flexibility increases the usage of the difference stages for any given bit rate.

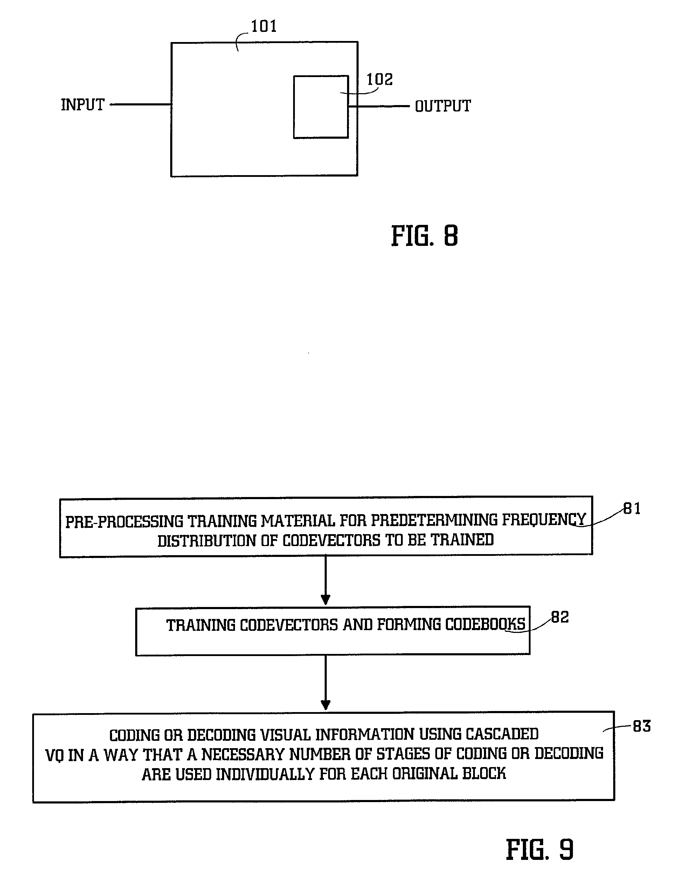

Due to the abovementioned matters the inventive arrangement needs evaluation means for examining the need of using additional coding stages. As FIG. **8** shows, the evaluation means **102** can preferably be implemented into the division modules (compare FIG.

**4**, **414**, **415**, and **410**) used 101, but the evaluation means can be an individual module.

Preferable implementation of the Invention

The inventive arrangement takes a difference block as input at each difference mode stage and encodes it further in order to reduce the remaining error in an efficient manner as compared with the additional bits required. The difference block may be the result from any prior encoding such as basic VQ encoding, motion compensation, DCT, or DWT.

The inventive solution consists of two parts: the training of the codebooks and algorithm for utilizing them in video encoding. Let us, for example, consider a frame from a gray-scale video, which has been encoded with some combination of VQ and motion compensation using 8x8 block size. The resulting difference image is divided into 4x4 blocks, which are to be encoded in two further stages.

The training of the first difference codebook, codebook A, has been performed with realistic difference material, but with the lowest frequency, i.e., the constant component removed. The standard k-means algorithm tends to emphasize the lower frequencies, but cannot generate fictitious finite averages to the resulting vectors. For a codebook with 256 vectors, the frequencies are concentrated to the lower half of the frequency table.

The second stage codebook, codebook B, is trained with difference blocks where, e.g., one third of the lowest frequencies have been removed. The resulting code vectors do have some weight in these frequencies due to the training algorithm but the emphasis is on the higher frequencies. Therefore the code vectors form codebooks A and B can efficiently complement each other. The fact that there is some overlap between the codebooks can be utilized by combining two vectors from A or two vectors from B or one from each. The overlap can be avoided by performing the training with the transform coefficients before the inverse transformation.

The actual encoding proceeds by first searching for the best matching vector from codebook A for each 4x4 block. Then the blockwise reductions in the distortion are calculated and the induced rate-distortion cost is compared with the cost without using the difference vectors. A typical cost function is $C = d + \lambda b$, where $d$ is the distortion, $\lambda$ is a weighting factor, and $b$ the number of bits used for the block. It should be noted that the weighting factor can also be attached to d, or the weighting can be handled using separate weighing factors attached to d and b. Code vectors are chosen only for those blocks for which this reduces the cost. In the next step, best matching code vectors in codebook B are searched for the remaining 4x4 difference blocks. Again code vectors are chosen only when it is cost efficient. The positions for the code vectors can be expressed by single bits so that one byte is enough to determine which subblocks of the original 8x8 block are corrected with vectors from codebook A and which from codebook B.

Finally, the code vectors are centered around zero and have predominantly very small values. Such codebooks can be efficiently compressed before transmitting them to the receiving end, thereby reducing the initial waiting time for the video recipient.

FIG. **9** illustrates an example of a flow chart describing the inventive method. First step **81** is to pre-process training material for predetermining frequency distribution of codevectors to be trained. Although the preprocessing is made beforehand, it is an essential step for achieving the desired performance of any arrangement according to the invention. The next step **82** is to train codevectors using the pre-processed training material. Codebooks are formed. Finally, information is coded/decoded **83** using a cascaded VQ in a way that a necessary number of stages of coding or decoding is used individually for each original block.

FIG. **10** illustrates an example of an arrangement for the invention. In practical usage, the invention is embedded as a part of complete video compression/decompression software. The compression, i.e. coding, software **91** is normally situated in a sending terminal **93.** The software normally consists of a user interface; media readers for reading in the video and audio information; some form of basic encoding; the difference encoding algorithms and codebooks proposed in this invention; some solution for sending the stream; and a small decoding software package **92** to be transmitted in the beginning of the video stream to a receiving terminal **94**. However, alternatively, the decoding software may be permanently situated in the receiving terminal

The invention combines the best properties of several of the existing solutions. In short, it is a variant of the cascaded VQ with certain improvements acquired from the DCT and DWT approaches. It should be noted that the encoding of original information can be made using any encoding technique, such as VQ, motion compensation, or some functional transform, and difference information is handled using VQ. The only drawback of the invention is in the possibly slow codebook search, which has to be performed once for each block and each codebook. However, this may be solved by using any of a number of fast-search algorithms, such as the tree-search VQ, developed for this purpose.

Although the inventive encoding is mostly described in this context, it is clear that the invention also concerns decoding. When decoding, the codebooks used must contain codevectors, which are weighted for certain frequency distribution. Using these codebooks together, a decompression result obtains at least the most significant frequencies. There also exist many alternative forms and adaptations for the invention. For example, any form of 'basic' encoding of intra and inter frames (i.e. blockwise or non-blockwise), functional transform or vector quantization, can be an underlying technique for the inventive arrangement, since they all leave a residual or difference between the original images and the encoded/decoded ones. The invention may also be used as one step in a sequence of difference encoding with a possibly varying block size in each step. In other words, in each sequence (stage) the difference block may be processed, for example using DCT, before coding the difference block. That is to say a pre-encoding before an actual coding. The difference can be encoded blockwise with any block size. A vector library for the difference vectors may be trained in any basis, i.e., as image blocks or functional transforms thereof. Codebook(s) may also be adaptively modified during the encoding process. The encoding procedure and ideas presented herein are applicable to any color presentation such as RGB, YUV, YCrCb, CieLAB, etc.

To conclude in the light of the above demands, there is a need for a video compression technology, which achieves high compression ratios while retaining good perceptual image quality and whose decoding side requires only minimal processing power. It is also evident that the invention can be implemented in many solutions in the scope of the inventive ideas.

**Claims**

1. An encoding method for compressing data, in which method the data is first encoded and difference data between the original data and the encoded data is formed, the difference data is divided into one or more first blocks, which are encoded at least at one stage, each stage comprising the action of the encoding and, if needed for the next stage, an action of calculating a following difference blocks between the current difference blocks and the encoded current difference blocks, performing the consecutive stages in a way that the calculated difference blocks at the previous stage are an input for the following stage, at each stage using a codebook, which is specific for the encoding of the stage, until at a final stage, final difference blocks between the previous difference blocks and the encoded previous difference blocks are encoded using the last codebook, the codebooks for said difference blocks containing codevectors trained with training difference material, **characterized in that** prior the training, the training difference material is preprocessed for individually adapting frequency distribution of each codevector for weighting to particular information of the data, and encoding each block independently using a necessary number of the stages needed for the particular block.

2. A method according to claim 1,**characterized in that** at least at one of said stages the difference blocks are divided into sub-blocks for being used as difference blocks at the next stage.

3. A method according to claim 1,**characterized in that** at least at one of said stages more than one codebook is used.

4. A method according to claim 2, **characterized in that** at least at one of said stages more than one codebook is used.

5. A method according to claim 1, **characterized in that** the preprocessing of the training material is made using discrete cosine transform.

6. A method according to claim 1, **characterized in that** the preprocessing of the training material is made using any functional transform.

7. A method according to claim , **characterized in that** the necessary number of stages is achieved using a cost function, in a way that if the cost of using the additional stage is too much, the additional stage is unnecessary.

8. A method according to claim 7, **characterized in that** the cost function takes into account a remaining difference, and the number of bits used, representing the cost of the stages, for coding the block in question.

9. A method according to claim 8, **characterized in that** the number of bits is weighted.

10. A method according to claim 2, **characterized in that** the preprocessing of the training material is made using discrete cosine transform.

11. A method according to claim 2, **characterized in that** the preprocessing of the training material is made using any functional transform.

12. A method according to claim 2, **characterized in that** the necessary number of the stages is achieved using a cost function, in a way that if the cost of using the additional stage is too much, the additional stage is unnecessary.

13. A method according to claim 12, **characterized in that** the cost function takes into account a remaining difference, and the number of bits used, representing the cost of the stages, for coding the block in question.

14. A method according to claim 13, **characterized in that** the number of bits is weighted.

15. A method according to claim 3, **characterized in that** the preprocessing of the training material is made using discrete cosine transform.

16. A method according to claim 3, **characterized in that** the preprocessing of the training material is made using any functional transform.

17. A method according to claim 3, **characterized in that** the necessary number of the stages is achieved using a cost function, in a way that if the cost of using the additional stage is too much, the additional stage is unnecessary.

18. A method according to claim 17, **characterized in that** the cost function takes into account a remaining difference, and the number of bits used, representing the cost of the stages, for coding the block in question.

19. A method according to claim 18, **characterized in that** the number of bits is weighted.

20. A method according to claim 4, **characterized in that** the preprocessing of the training material is made using discrete cosine transform.

21. A method according to claim 4, **characterized in that** the preprocessing of the training material is made using any functional transform.

22. A method according to claim 4, **characterized in that** the necessary number of stages is achieved using a cost function, in a way that if the cost of using the additional stage is too much, the additional stage is unnecessary.

23. A method according to claim 22, **characterized in that** the cost function takes into account a remaining difference, and the number of bits used, representing the cost of the stages, for coding the block in question.

24. A method according to claim 23, **characterized in that** the number of bits is weighted.

25. A method according to claim 1, **characterized in that** at least at one stage the difference blocks are processed before encoding.

26. A method according to claim 2, **characterized in that** at least at one stage the difference blocks are processed before encoding.

27. A decoding method for decompressing data, the method comprising codebooks for the decompression of encoded difference data, **characterized in that** at least one of said codebooks contains codevectors, which have been weighted to a specific frequency distribution, and using the codebooks together performing a decompression result, which comprises at least the most significant frequencies.

28. An encoder for compressing data, wherein the data is first encoded and difference data between the original data and the encoded data is formed, the difference data is divided into one or more first blocks, which are encoded at least at one stage, each stage comprising the action of the encoding and, if needed for the next stage, an action of calculating a following difference blocks between the current difference blocks and the encoded current difference blocks, performing the consecutive stages in a way that the calculated difference blocks at the previous stage are an input for the following stage, at each stage using a codebook, which is specific for the encoding of the stage until at a final stage, final difference blocks between previous difference blocks and the encoded previous difference blocks are calculated and encoded using a last codebook, the codebooks for said difference blocks containing codevectors trained with training difference material, **characterized in that** at least one codebook used for coding differences has been weighted to a specific frequency distribution, and the encoder comprises evaluation means for assigning a necessary number of the stages needed for the particular block.

29. An encoder according to claim 28, **characterized in that** at least at one stage the difference blocks are divided into sub-blocks for being used as difference blocks at the next stage.

30. A method according to claim 28, **characterized in that** at least at one of said stages more than one codebooks is used.

31. A method according to claim 29, **characterized in that** at least at one of said stages more than one codebooks is used.

32. An encoder according to claim 28, **characterized in that** the evaluation means further comprises a cost function, which calculates the cost of using the additional stage.

33. An encoder according to claim 32, **characterized in that** the cost function takes into account a remaining difference, and the number of bits used, representing the cost of the stages, for coding the block in question.

34. An encoder according to claim 33, **characterized in that** the number of bits is weighted.

35. An encoder according to claim 29, **characterized in that** the evaluation means further comprises a cost function, which calculates the cost of using the additional stage.

36. An encoder according to claim 35, **characterized in that** the cost function takes into account a remaining difference, and the number of bits used, representing the cost of the stages, for coding the block in question.

37. An encoder according to claim 36, **characterized in that** the number of bits is weighted.

38. An encoder according to claim 30, **characterized in that** the evaluation means further comprises a cost function, which calculates the cost of using the additional stage.

39. An encoder according to claim 38, **characterized in that** the cost function takes into account a remaining difference, and the number of bits used, representing the cost of the stages, for coding the block in question.

40. An encoder according to claim 39, **characterized in that** the number of bits is weighted.

41. An encoder according to claim 31, **characterized in that** the evaluation means further comprises a cost function, which calculates the cost of using the additional stage.

42. An encoder according to claim 41, **characterized in that** the cost function takes into account a remaining difference, and the number of bits used, representing the cost of the stages, for coding the block in question.

43. An encoder according to claim 42, **characterized in that** the number of bits is weighted.

44. A decoder using codebooks for the decompression of encoded difference data, **characterized in that** at least one of the codebooks has been weighted to a specific frequency distribution.

FIG. 1

FIG. 2

FIG. 3

FIG. 4

FIG. 5

FIG. 6

FIG. 7

**FIG. 8**

PRE-PROCESSING TRAINING MATERIAL FOR PREDETERMINING FREQUENCY DISTRIBUTION OF CODEVECTORS TO BE TRAINED — 81

TRAINING CODEVECTORS AND FORMING CODEBOOKS — 82

CODING OR DECODING VISUAL INFORMATION USING CASCADED VQ IN A WAY THAT A NECESSARY NUMBER OF STAGES OF CODING OR DECODING ARE USED INDIVIDUALLY FOR EACH ORIGINAL BLOCK — 83

**FIG. 9**

FIG. 10